# EUROPÄISCHE PATENTSCHRIFT

(11) **EP 0 658 463 B1**
(45) Veröffentlichungstag und Bekanntmachung des Hinweises auf die Patenterteilung: **25.02.1998**
(21) Anmeldenummer: 94118980.5
(22) Anmeldetag: 02.12.1994
(51) Int. Cl.: B60T 8/36

(54) **Ventilsteuervorrichtung**
Valve control device
Dispositif de contrôle pour soupape

(30) Priorität: 18.12.1993 DE 4343325
(43) Veröffentlichungstag der Anmeldung: 21.06.1995
(73) Patentinhaber: TEMIC TELEFUNKEN microelectronic GmbH, 74072 Heilbronn (DE)
(72) Erfinder: Zeides, Otto, D-85120 Hepberg (DE); Schirmer, Klaus, D-85049 Ingolstadt (DE)
(74) Vertreter: Maute, Hans-Jürgen, Dipl.-Ing.

(56) Entgegenhaltungen:
- EP-A- 0 627 349
- DE-A- 4 013 875
- DE-A- 4 104 804
- DE-A- 4 132 468

## Beschreibung

Die Erfindung betrifft eine Ventilsteuervorrichtung zur Steuerung eines hydraulischen oder pneumatischen Systems mit mehreren in einem Ventilblock angeordneten Magnetventilen gemaß dem Oberbegriff des Patentanspruches 1 sowie deren Verwendung in einem Kfz.

Ein ABS (Antiblockier)-System gehört heutzutage zunehmend zur Standardausrüstung eines Kraftfahrzeuges. Hierbei kann das Bremsverhalten jedes Rades des Kraftfahrzeuges über ein diesem Rad zugeordnetes Einlaß- und Auslaßventil gesteuert werden, so daß insgesamt 8 Magnetventile ein hydraulisches System bilden. Zusätzlich können noch weitere Magnetventile für ein ASR (Antischlupfregelung)-System vorgesehen werden. Die Steuerung dieser Magnetventile erfolgt über Magnetspulen mittels einer Steuerelektronik, die in der Regel in der Fahrgastzelle des Kraftfahrzeuges untergebracht ist. Nachteilig ist der dabei erforderliche Kabelbaum zur Verbindung der Magnetspulen mit der Steuerelektronik. Die Magnetspulen werden auf die auf dem Ventilblock angeordneten Ventildome geschoben, wobei die Magnetspulen selbst von einem Spulenhalter aufgenommen werden. Da die Lage der Magnetspulen durch die Ventildome vorgegeben ist, muß der Spulenhalter eine hohe Paßgenauigkeit für die Magnetspulen aufweisen. Ferner muß der Spulenhalter auch gewährleisten, daß ein ausreichender Magnetschluß zwischen jeder Magnetspule und dem Ventilblock sichergestellt ist, um ein sicheres Ansprechen der in den Ventildomen sich bewegenden Ventilnadeln zu gewährleisten.

Die Aufgabe der vorliegenden Erfindung besteht demnach darin, eine Ventilsteuervorrichtung der eingangs genannten Art anzugeben, die einfach und damit kostengünstig herzustellen ist und gleichzeitig einen sicheren Magnetschluß zwischen jeder Magnetspule und dem Ventilblock gewährleistet.

Diese Aufgabe wird durch die kennzeichnenden Merkmale des Patentanspruches 1 gelöst, wonach auf der dem Ventilblock abgewandten Seite des Magnetspulenhalters eine Leiterplatte zur Aufnahme der Steuerelektronik vorgesehen ist, so daß hierdurch ein Kabelbaum entfällt. Ferner trägt die dem Ventilblock zugewandte Seite des Magnetspulenhalters Schächte zur Aufnahme der Magnetspulen, deren Tiefe ungefähr der Länge der Magnetspulen entspricht. Ferner ist auf dem Schachtboden jedes Schachtes ein elastisches Federelement angeordnet, das die Magnetspule gegen den Ventilblock drückt. Schließlich weist jede Magnetspule erste Mittel auf, die mit dem Schacht zugeordneten zweiten Mittel beim Einführen der Magnetspule in den Schacht als Schnappverriegelung derart zusammenwirken, daß ein Herausziehen der Magnetspule aus dem Schacht verhindert wird, wobei die ersten und zweiten Mittel derart elastisch ausgebildet sind, daß die Magnetspule in der Ebene senkrecht zu ihrer Spulenachse nach allen Richtungen in geringem Maß verschiebbar bleibt.

Durch die elastischen Federelemente wird gewährleistet, daß die Magnetspulen ständig gegen den Ventilblock gedrückt werden, wodurch ein ausreichend hoher Magnetschluß sichergestellt ist. Mit den durch die ersten und zweiten Mittel beweglich gehaltenen Magnetspulen werden Maßdifferenzen zwischen den Schächten in bezug auf die Abstände der Ventildome ausgeglichen, so daß der Spulenhalter keine so hohe Maßgenauigkeit in bezug auf die Schachtabstände aufweisen muß.

Nachdem die Leiterplatte auf den Spulenhalter montiert ist, werden die Magnetspulen so in die Schächte des Spulenhalters eingeführt, daß deren Anschlußdrähte direkt auf die Leiterplatte geführt werden, um dort eine entsprechende Lötverbindung zu bilden.

Eine besonders vorteilhafte Ausbildung der ersten und zweiten Mittel besteht darin, daß die ersten Mittel aus mehreren elastischen, einseitig an der Magnetspule befestigten Haltefingern bestehen, an deren freien Enden jeweils eine Rastnase angeordnet ist, die beim Einführen der Magnetspule in den Schacht federnd in eine als zweites Mittel ausgebildete, am Umfang des Schachtes angeordnete Nut einrastet. Vorzugsweise kann dabei der Haltefinger an der am Schachtboden anliegenden Stirnfläche der Magnetspule befestigt sein und eine Länge aufweisen, die ungefähr der halben Länge der Magnetspule entspricht.

Die erfindungsgemäße Ventilsteuervorrichtung kann mit Vorteil in einem ABS- oder ASR-System eines Kraftfahrzeuges eingesetzt werden.

Im folgenden soll die Erfindung anhand eines Ausführungsbeispieles im Zusammenhang mit den Zeichnungen dargestellt und erläutert werden. Es zeigen:
- Figur 1: eine Draufsicht auf eine Steuervorrichtung gemäß der Erfindung mit einer Anordnung aus 8 Magnetspulen,
- Figur 2: eine Schnittdarstellung der Steuervorrichtung nach Figur 1,
- Figur 3: eine Explosionsdarstellung aus Magnetspule, Federelement und zugeordnetem Ventildom der Steuervorrichtung nach Figur 1,
- Figur 4: eine Schnittdarstellung des Federelementes nach Figur 3,
- Figur 5: eine Schnittdarstellung eines Spulenschachtes mit dazugehöriger Magnetspule beim Einführen dieser Magnetspule in den Spulenschacht,
- Figur 6: eine Schnittdarstellung des in dem Spulenschacht nach Figur 5 verwendeten Federelementes und
- Figur 7: eine Draufsicht auf eine Magnetspule mit Haltefingern und Anschlußdrähten.

In den Zeichnungen sind gleiche bzw. funktionsgleiche Teile bzw. Bauelemente mit den gleichen Bezugszeichen versehen.

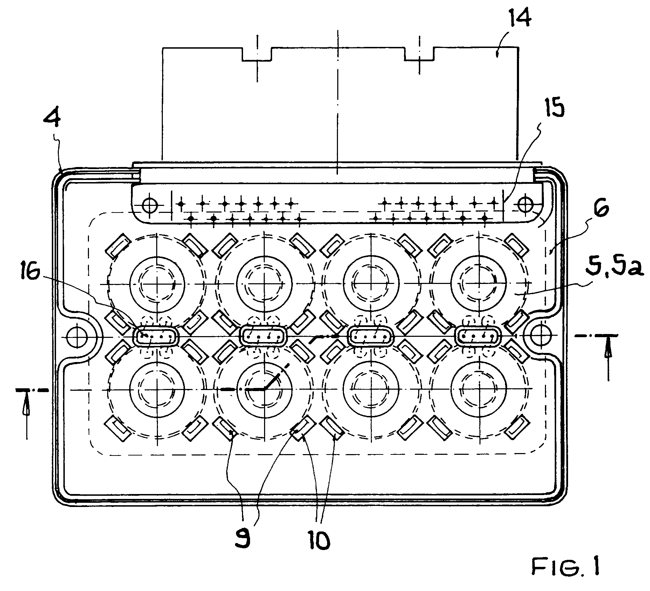

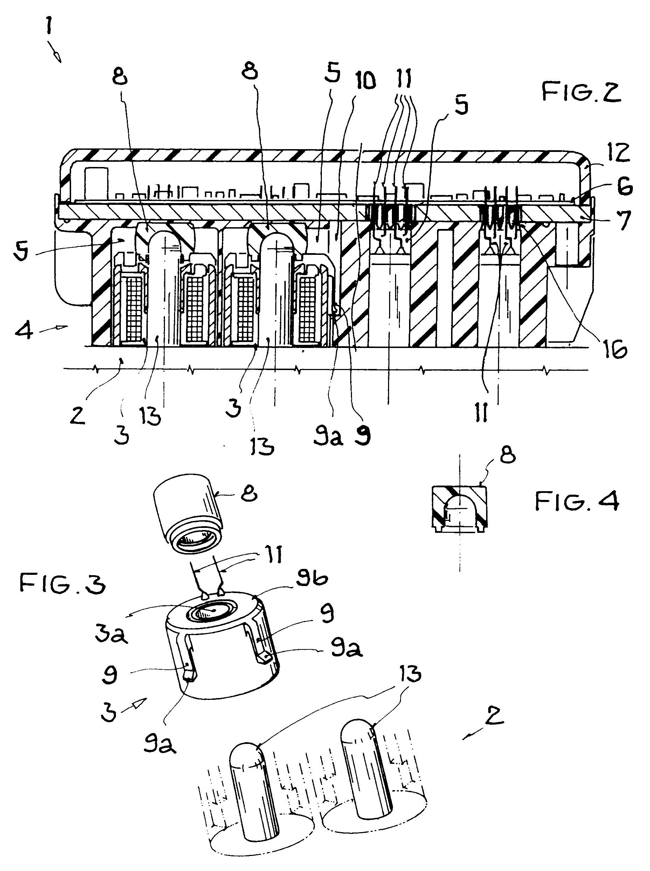

Die in Figur 1 und 2 dargestellte Ventilsteuervorrichtung enthält 8 Magnetspulen, die von einer auf einer Leiterplatte 6 angeordneten Steuerelektronik gesteuert werden. Eine solche Ventilsteuervorrichtung wird in ABS- bzw. ASR-Regelungen eingesetzt. Die genannten 8 Magnetspulen sind in zwei parallelen Reihen zu je 4 Magnetspulen angeordnet, wobei jeweils zwei gegenüberliegende Magnetspulen ein Auslaß- bzw. Einlaßventil einer einem Rad eines Fahrzeuges zugeordneten Bremse steuert.

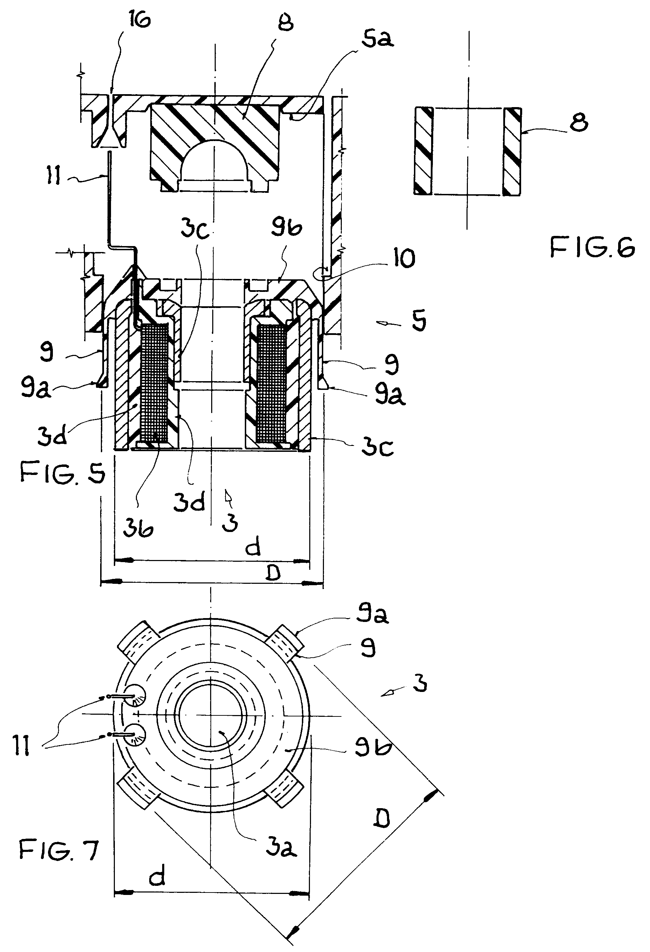

Nach Figur 2 besteht die Ventilsteuervorrichtung 1 aus einem Spulenhalter 4, der zwecks Aufnahme der Magnetspulen 3 acht Spulenschächte 5 aufweist. Als Magnetspulen 3 werden Ringspulen mit einer Mittelbohrung 3a verwendet (vgl. Figur 3), wobei nach Figur 5 eine solche Magnetspule 3 mit einer Drahtwicklung 3b und einem Ringjoch 3c aufgebaut sowie mit einer Vergußmasse 3d vergossen ist. Solche Magnetspulen 3 werden in die Schächte 5 des Spulenhalters 4 eingesetzt, wobei gleichzeitig die Anschlußdrähte 11 in Durchgangsbohrungen 16, die zwischen gegenüberliegenden Schächten 5 in der Ebene des Schachtbodens 5a angeordnet sind (vgl. Figuren 1 und 5), eingefädelt werden. Ein derartig montierter Spulenhalter 4 wird so auf einen die Ventile tragenden Ventilblock 2 gesetzt, daß die Ventildome 13 in die Mittelbohrungen 3a der Magnetspulen 3 reichen und diese Magnetspulen 3 so formschlüssig auf dem Ventilblock aufsitzen, daß zwischen dem Ringjoch 3c der Magnetspulen 3 und dem Ventilblock 2 ein optimaler Magnetschluß zustande kommt (vgl. Figuren 2 und 3).

Um ein sicheres Andrücken der Magnetspule 3 auf den Ventilblock 2 sicherzustellen, wird zwischen der Magnetspule 3 und dem Schachtboden 5a ein Federelement 8 angeordnet, wie dies aus den Figuren 2, 3 und 5 zu ersehen ist. Nach den Figuren 2, 3, 4 und 5 ist dieses Federelement 8 als elastische Haube ausgebildet, kann jedoch auch, wie es in Figur 6 gezeigt ist, als elastische Hülse ausgeformt sein. Ist der Spulenhalter 4 mit dem Ventilblock 2 zusammengebaut, wie es in Figur 2 dargestellt ist, übt dieses elastische Federelement 8 ständig einen Druck auf die Magnetspule 3 aus, so daß deren Ringjoch 3c formschlüssig mit dem Ventilblock 2 verbunden ist. Die Magnetspule 3 weist neben den schon genannten Teilen 3b, 3c und 3d gemäß den Figuren 5 und 7 eine Haltespinne 9b auf, an die gleichmäßig am Umfang der Magnetspule verteilte Haltefinger 9 angeflanscht sind. Diese Haltespinne 9b ist auf derjenigen Stirnseite der Magnetspule 3 angeordnet, die über das elastische Federelement 8 in Kontakt mit dem Schachtboden 5a kommt (vgl. auch Figur 3). Die an jeder Magnetspule 3 vorgesehenen vier Haltefinger 9 verlaufen parallel zur Längsachse der Magnetspule und sind einendig an der Stirnseite befestigt und verlaufen nahezu parallel zur Mantelfläche des Ringjoches 3c. Dadurch wird der eigentliche äußere Durchmesser d der Magnetspule 3 an den Stellen, wo die Haltefinger 9 angebracht sind, auf einen Durchmesser D vergrößert (vgl. Figuren 5 und 7). Um eine solche Magnetspule 3 in einen Schacht 5 einführen zu können, weist dieser im Bereich der Haltefinger 9 an den Schachtwänden Aussparungen auf, so daß in diesem Bereich der lichte Durchmesser des Schachtes 5 dem durch die Haltefinger 9 vorgegebenen Durchmesser D entspricht. Beim Einführen der Magnetspule 3 in den Schacht 5 stößt nun die nach außen am freien Ende des Haltefingers 9 angebrachte Rastnase 9a an den Rand des Schachtes 5 an. Da die Haltefinger 9 elastisch sind, wird die Rastnase 9a beim weiteren Einführen der Magnetspule 3 an die Mantelfläche der Magnetspule gedrückt. Ist nun die Magnetspule 3 vollständig in den Schacht 5 eingeführt, kann sich der Haltefinger 9 mit der Rastnase 9a in einer ebenfalls in der Schachtwand angeordneten Nut 10 entspannen. Im eingebauten Zustand der Magnetspule stößt somit die Rastnase an das Ende der Nut 10, so daß ein selbständiges Herausfallen der Magnetspule aus dem Schacht 5 verhindert wird, wie dies auch aus Figur 2 zu ersehen ist.

Der wesentlichste Vorteil der Haltefinger 9 im eingebauten Zustand der Magnetspulen 3 besteht darin, daß diese in senkrechter Richtung zu ihrer Längsachse in geringem Maße aufgrund der elastischen Haltefinger 9 verschiebbar sind. Dadurch werden zwischen dem Ventilblock 2 und dem Spulenhalter 4 auftretende Maßungenauigkeiten ausgeglichen, bzw. der Spulenhalter 4, insbesondere die Spulenschächte 5, müssen keine so großen Paßgenauigkeiten aufweisen. Somit paßt sich die Lage der Magnetspulen 3 an diejenige der Ventildome 13 des Ventilblockes 2 an.

Jede Magnetspule weist zwei Anschlußdrähte 11 auf, die durch entsprechende Durchgangsbohrungen 16 im Bereich des Schachtbodens des Spulenhalters 4 auf die Leiterplatte 6 geführt sind, um dort verlötet zu werden (vgl. Figur 2). Dabei sind die Durchgangsbohrungen 16 von jeweils zwei gegenüberliegenden Magnetspulen, die jeweils in einer Reihe der Magnetspulenanordnungen liegen, in einer Reihe zusammengefaßt, wie es in Figur 1 dargestellt ist.

Auf der die Leiterplatte 6 tragenden Seite des Spulenhalters 4 ist auf einer Längsseite auch eine Steckerleiste 15 über Anschlußleitungen mit der Leiterplatte verbunden. Da diese Steuervorrichtung 1 im Motorraum angeordnet werden kann, wird die Verbindung zu einer im Fahrgastraum angeordneten Zentralelektronik mittels eines Verbindungskabels hergestellt, dessen Stecker von einem an den Spulenhalter 4 angeflanschten Steckerschacht 14 aufgenommen und zentriert wird (vgl. Figur 1). Da üblicherweise die Steuerelektronik für die Magnetventile ebenfalls im Fahrgastraum untergebracht sind, entfällt nunmehr, da die die Steuerelektronik tragende Leiterplatte 6 ebenfalls von dem Spulenhalter 4 aufgenommen wird, eine Kabelverbindung.

Nach Figur 2 kann die Leiterplatte 6, eine flexible Leiterplatte, verwendet werden, die dann von einer Grundplatte 7 getragen wird. Eine solche Grundplatte 7 besteht vorzugsweise aus Aluminium. Schließlich wird die die Leiterplatte 6 tragende Seite des Spulenhalters 4 mit einem haubenförmigen Deckel 12 abgedeckt, der somit zusammen mit dem Spulenhalter 4 ein vollständiges Gehäuse bildet.

Beim Einsatz einer solchen beschriebenen Ventilsteuervorrichtung in einem Kraftfahrzeug, muß diese fahrraumtauglich, d. h., insbesondere gegen den Eintritt von Feuchtigkeit geschützt werden. Hierzu wird die Ventilsteuervorrichtung 1 gemäß Figur 2 mit einem elastischen Material, beispielsweise Silikongel, ausgegossen, wodurch alle verbleibenden Hohlräume, sowohl im Bereich der Spulenschächte 5 als auch im Bereich der Leiterplatte 6 ausgefüllt werden. Durch die elastische Eigenschaft des Vergußmaterials bleibt die Beweglichkeit der Magnetspulen 3 sowohl in deren Längsrichtung als auch in senkrechter Richtung zur Längsrichtung der Magnetspulen verschiebbar.

Die erfindungsgemäße Ventilsteuervorrichtung ist nicht auf die Anwendung in ABS- und ASR-Systemen beschränkt, sondern ist überall im Kraftfahrzeug einsetzbar, wo Magnetventile zum Einsatz kommen.

## Patentansprüche

1. Ventilsteuervorrichtung (1) zur Steuerung eines hydraulischen/pneumatischen Systems mit mehreren in einem Ventilblock (2) angeordneten Magnetventilen, denen jeweils eine Magnetspule (3) zugeordnet ist, die in einem Spulenhalter (4) angeordnet sind, gekennzeichnet durch folgende Merkmale:
a) es ist eine Leiterplatte (6) vorgesehen, die auf der dem Ventilblock (2) abgewandten Seite des Spulenhalters (4) angeordnet ist und eine Steuerelektronik aufnimmt,
b) die dem Ventilblock (2) zugewandte Seite des Spulenhalters (4) weist zur Aufnahme der Magnetspulen (3) Spulenschächte (5) auf, deren Tiefe ungefähr der Länge der Magnetspulen (3) entsprechen,
c) zwischen jeder Magnetspule (3) und dem zugehörigen Spulenschachtboden (5a) ist ein elastisches Federelement (8) angeordnet, das die Magnetspule (3) gegen den Ventilblock (2) drückt,
d) jede Magnetspule (3) weist erste Mittel (9, 9a, 9b) auf, die mit dem Spulenschacht (5) zugeordneten zweiten Mittel (10) beim Einführen der Magnetspule (3) in den Spulenschacht (5) als Schnappverriegelung derart zusammenwirken, daß ein Herausziehen der Magnetspule (3) aus dem Spulenschacht (5) verhindert wird und
e) die ersten und zweiten Mittel (9, 9a, 9b, 10) sind derart elastisch ausgebildet, daß die Magnetspule (3) in der Ebene senkrecht zu ihrer Spulenachse (13) nach allen Richtungen in geringem Maße verschiebbar bleibt.

2. Ventilsteuervorrichtung nach Anspruch 1, dadurch gekennzeichnet, daß die Anschlußdrähte (11) der Magnetspule (3) direkt auf die Leiterplatte (6) geführt werden.

3. Ventilsteuervorrichtung nach Anspruch 1 oder 2, dadurch gekennzeichnet, daß die ersten Mittel (9, 9a, 9b) aus mehreren elastischen, einseitig an der Magnetspule (3) befestigten Haltefingern (9) bestehen, an deren freien Enden jeweils eine Rastnase (9a) angeordnet ist, die beim Einführen der Magnetspule (3) in den Spulenschacht (5) federnd in eine als zweites Mittel ausgebildete, am Umfang des Spulenschachtes (5) angeordneten Nut (10) einrastet.

4. Ventilsteuervorrichtung nach Anspruch 3, dadurch gekennzeichnet, daß die Haltefinger (9) an der dem Spulenschachtboden (5) zugewandten Stirnfläche der Magnetspule (3) befestigt ist und eine Länge aufweist, die ungefähr der halben Länge der Magnetspule (3) entspricht.

5. Verwendung einer Ventilsteuervorrichtung nach einem der vorangehenden Ansprüche für ein ABS (Antiblockierschutz)-System und/oder ein ASR (Antischlupfregelung)-System eines Kraftfahrzeuges.

## Claims

1. Valve control device (1) for controlling a hydraulic/pneumatic system with several magnetic valves disposed in a valve block (2), to which magnetic valves a respective magnet coil (3) is allocated, which are arranged in a coil holder (4), characterised by the following features:
a) a circuit board (6) is provided, which is arranged on the side of the coil holder (4) facing away from the valve block (2) and accommodates a control electronics unit,
b) the side of the coil holder (4) facing the valve block (2) has coil slots (5) to receive the magnet coils (3) which have a depth approximately corresponding to the length of the magnet coils (3),
c) an elastic spring element (8), which presses the magnet coil (3) against the valve block (2), is arranged between each magnet coil (3) and the associated coil slot base (5a),
d) each magnet coil (3) has first means (9, 9a, 9b), which cooperate with second means (10) allocated to the coil slot (5) when the magnet coil (3) is inserted into the coil slot (5) in the form of a snap lock arrangement in such a way as to prevent removal of the magnet coil (3) from the coil slot (5), and
e) the first and second means (9, 9a, 9b, 10) are constructed to be elastic so that the magnet coil (3) remains displaceable to a slight degree in all directions in the plane perpendicular to its coil axis (13).

2. Valve control device according to Claim 1, characterised in that the connection wires (11) of the magnet coil (3) are guided directly onto the circuit board (6).

3. Valve control device according to Claim 1 or Claim 2, characterised in that the first means (9, 9a, 9b) comprise several elastic holding fingers (9) fastened on one side on the magnet coil (3), at the free ends of which a respective detent (9a) is arranged which, upon insertion of the magnet coil (3) into the coil slot (5), locks resiliently into a groove (10) constructed as a second means disposed on the periphery of the coil slot (5).

4. Valve control device according to Claim 3, characterised in that the holding finger (9) is fastened on the face of the magnet coil (3) facing the coil slot base (5) and has a length corresponding approximately to half the length of the magnet coil (3).

5. Use of a valve control device according to one of the preceding claims for an ABS (anti-skid) and/or anti-slip control system of a motor vehicle.

## Revendications

1. Dispositif (1) de commande de vannes pour commander un système hydraulique/pneumatique comportant plusieurs électrovannes qui sont disposées dans un bloc des vannes (2) et à chacune desquelles correspond une bobine magnétique (3), ces bobines étant disposées dans un porte-bobines (4), caractérisé par les caractéristiques suivantes:
a) il est prévu une carte à circuit imprimé (6) qui est disposée sur la face du porte-bobines (4) opposée au bloc des vannes (2) et qui reçoit un circuit électronique de commande,
b) la face du porte-bobines (4) située du côté du bloc des vannes (2) présente, pour recevoir les bobines magnétiques (3), des puits (5) dont la profondeur correspond à peu près à la longueur des bobines magnétiques (3),
c) entre chaque bobine magnétique (3) et le fond (5a) du puits correspondant est disposé un élément élastique (8) qui pousse la bobine magnétique (3) contre le bloc des vannes (2),
d) chaque bobine magnétique (3) présente des premiers moyens (9, 9a, 9b) qui, lors de l'introduction de la bobine magnétique (3) dans le puits (5), collaborent avec des seconds moyens (10), correspondant au puits (5), sous forme d'un verrouillage par déformation élastique de façon à interdire qu'une bobine magnétique (3) puisse sortir hors du puits (5) et
e) les premiers et les seconds moyens (9, 9a, 9b, 10) sont de conception élastique de façon que la bobine magnétique (3) puisse coulisser dans une faible mesure dans toutes les directions dans le plan perpendiculaire à son axe (13).

2. Dispositif de commande de vannes selon la revendication 1, caractérisé par le fait que les conducteurs de raccordement (11) de la bobine magnétique (3) sont directement reliés sur la carte à circuit imprimé (6).

3. Dispositif de commande de vannes selon la revendication 1 ou 2, caractérisé par le fait que les premiers moyens (9, 9a, 9b) sont constitués de plusieurs doigts élastiques de maintien qui sont fixés d'un côté de la bobine magnétique (3) et aux extrémités libres de chacun desquels est disposé un talon de crantage (a) qui, lors de l'introduction de la bobine magnétique (3) dans le puits (5), se crante élastiquement dans une rainure (10) formant seconds moyens, disposée à la périphérie du puits (5).

4. Dispositif de commande de vannes selon la revendication 3, caractérisé par le fait que les doigts de maintien (9) sont fixés à la surface frontale, située du côté du fond (5) du puits de bobine, de la bobine magnétique (3) et présentent une longueur qui correspond à peu près à la demi-longueur de la bobine magnétique (3).

5. Emploi d'un dispositif de commande de vannes selon l'une des revendications précédentes pour un système ABS (protection antiblocage) et/ou un système ASR (régulation antipatinage) d'un véhicule à moteur.
